# EUROPEAN PATENT SPECIFICATION

(11) **EP 2 132 134 B1**
(45) Date of publication and mention of the grant of the patent: **06.01.2016**
(21) Application number: 08712519.1
(22) Date of filing: 15.02.2008
(51) Int. Cl.: B82B 3/00, B01J 13/00

(54) **METHOD FOR PRODUCING COLLOIDAL SOLUTION OF METAL NANO-PARTICLE AND METAL NANO-PARTICLE THEREBY**
VERFAHREN ZUR HERSTELLUNG EINER KOLLOIDALEN LÖSUNG EINES METALLNANOTEILCHEN UND METALLNANOTEILCHEN DADURCH
PROCÉDÉ POUR PRODUIRE UNE SOLUTION COLLOÏDALE DE NANOPARTICULE DE MÉTAL ET NANOPARTICULE DE MÉTAL AINSI OBTENUE

(30) Priority: 15.03.2007 KR 20070025423
(43) Date of publication of application: 16.12.2009
(73) Proprietor: Yoon, Eui-Sik, Gyeonggi-do 426-791 (KR)
(72) Inventor: Yoon, Eui-Sik, Gyeonggi-do 426-791 (KR)
(74) Representative: Gille Hrabal
(86) International application number: PCT/KR2008/000892
(87) International publication number: WO 2008/111735

(56) References cited:
- EP-A1- 1 084 746
- EP-A1- 1 084 746
- WO-A1-2006/126808
- US-A- 5 925 463
- US-A1- 2007 009 672

## Description

### [Technical Field]

The present invention relates to a method of producing a colloidal solution of metal nano-particles. More specifically, the present invention relates to a method of producing a colloidal solution of metal nano-particles, wherein the metal nano-particles dispersed in the colloidal solution are ultra fine and maintain their stability in the solution to thereby exhibit an efficient pharmacological effect when administered into a body and the metals are excreted out of the body through urine without accumulation in a body so that they are not harmful for the body.

### [Background Art]

Recently, metal ultra-fine particles, that is, metal nano-particles as a functional material have a growing interest and various studies about the particles are being conducted in a medicine field as well as electric, electronic, mechanic and metallic fields, etc.

In a study of metal nano-particles in the field of medicine, Dykman L.A., et al., conducted a study immunizing rabbits and mice with various antigens present in the nature together with a gold colloidal solution, and found that the gold colloidal solution enhanced immunity against the antigens. Meanwhile, it was reported that gold colloid promotes the production of antibodies more rapidly and efficiently, compared with a conventional immune boosting system using a composition which is composed of antigen and adjuvant. In view of these reports, it seems that gold colloid may be adopted to enhance immune responses, such as lysozyme concentration in the blood, activity of the complement system proteins as well as phagocytic and bactericidal activities. Further, the administration of gold colloid together with hapten or complete antigen to experimental animals induced the production of antibodies having a high activity (L. A. Dykman, M. V. Sumaroka, S. A. Staroverov, I. S. Zaitseva, and V. A. Bogatyrev, Biology Bulletin, Vol. 31, No. 1. 2004, 75-79).

Professor Mr. Hyung Sun Yoon (Department of Science of Fermentation and Food, Seoul University of Venture & Information) suggested the mechanism of gold to anti-inflammation. He reported that gold blocks the signal transmission system of 'toll-like receptor' which is important in an immune system in a body, thereby inhibiting inflammation. Specifically, the toll-like receptor acts as an initial defense system when bacteria, virus, etc. attack a body and induces innate and acquired immune responses to thereby inhibit the occurrence of diseases. However, when the immune system of toll-like receptor is overly loaded, inflammation occurs. In this course, gold blocks the signal transmission of toll-like receptor which can cause inflammation, resulting in anti-inflammation.

In case of platinum nano-particles, it was known that they eliminate free radicals by a catalytic action. The utility of platinum nano-particles for the treatment of cardiovascular disorders caused by metabolic syndrome was found in a mouse model experiment.

In the 21^{st} Scientific Meeting of the International Society of Hypertension held in Fukuoka, researchers who belong to the department of internal medicine of kidney and internal secretion in the hospital of Tokyo University reported that platinum nano-particles eliminate reactive oxygen species (ROS) by a catalytic response in vitro. Also, the researchers constructed an animal model of metabolic syndrome by feeding obesity mouse models (db/db mouse) on high-salt dietary and administrating angiotensin II which raises blood pressure, thereby resulting in hypertension and, thereafter, observed the change of the model for 4 weeks, while administrating daily platinum nano-particles together with water. As a result of this, systolic blood pressure was 113 mmHg in the normal mice, 136 mmHg in the model mice which were not administered with platinum nano-particles, and 129 mmHg in the model mice which were administered with platinum nano-particles. The value of cholesterol was 150 mg/dL in the normal mice, 151 mg/dL in the platinum nano-particle non-administered mice, and 140 mg/dL in the platinum nano-particle administered mice. Further, in the aspect of histology, the fibrosis of coronary artery was reduced by 50%. Based on these results, they concluded that platinum nano-particles are an antioxidant material to eliminate active oxygen species which damage internal organs.

As shown above, the fact that gold, platinum, iron, calcium, magnesium, zinc, copper, etc. can be effectively applied to the field of medicine is coming to light. Meanwhile, in order for metal nano-particles to efficiently exert their pharmacological effects without damaging a human body, the following are needed: the metal nano-particles which are administered into a body do not have impurities which damage the body, the size of particles is ultra-fine and the particles are not accumulated in a body and stably maintain dispersion state so that they are easily excreted out of a body through urine.

The preparation methods of metal nano-particles are classified into three groups of physical method, chemical method and electrolytic method.

The physical method includes a vaporization method in which metal is vaporized under the condition of vapor or low pressure and then condensated, an atomization method in which molten metal is scattered into gas, etc., an electric dispersion method in which ark is generated between metals in the air or gas, etc. But, the cost of production is too high and the productivity is very low, and thus the method is not commonly adopted.

The chemical method includes a gas reduction method wherein solid salt is reduced by hydrogen, carbon monoxide, etc. at temperatures of below melting point, a gas phase reaction method wherein a vapor of metal chloride is reduced by hydrogen, carbon monoxide, etc., a precipitation method wherein metal ion is reduced and then precipitated as metal, etc. However, although this method is more preferred in a large scale production compared with the physical method, there are some disadvantages: the process is complex; it is difficult to avoid incorporation of impurities; when nano-particles are formed, it is difficult to prevent non-uniformity and coarsening of particles due to non-homogeneous chemical reaction; and since harmful substances are inevitably used in most of chemical reactions, a human being is affected by side effects and, thus, the chemical method is not suitable for a medicine.

Meanwhile, in the electrolytic method, metal electrodes are oppositely arranged in aqueous electrolytic solution in which metal salts are dissolved and direct current or alternating current is given. Then, metal ions in the solution are reduced to extract metal nano-particles, and the deposits are separated by a sedimentation, filtration, etc. and then dried to produce metal nano-particles. For example, Korean Patent Application Laid-open Publication No. 10-2004-105914 discloses a direct current method and Japanese Patent Application Laid-open Publication No. (Hei)4-157193 describes an alternating current method.

US 5 925 463 A discloses a method of producing a metal colloid in which a metal anode and a metal cathode are arranged in an organic, aprotic solvent in which metal salts are dissolved and a current is applied to the anode and the cathode while stirring the organic, aprotic solution, characterized by adding tetraalkylammonium salts to the organic, aprotic solution.

As previously described, according to the preparation method of metal nano-particles by electrolysis, relatively fine particles can be obtained without impurities, compared with the physical or chemical method. Thus, metal nano-particles which are applied for a medicine are typically prepared by the electrolytic method, the particles are dispersed into pure water or the other solution so as to obtain a colloidal solution of the particles, and the colloidal solution are administered by injection or the other methods such as oral administration.

Meanwhile, the size of metal nano-particles reduced in an aqueous electrolytic solution is very fine, and thus van der Waals attraction has an effect on the particles, resulting in accumulation of neighboring particles. It is very difficult to separate the accumulated particles again.

### [Disclosure]

### [Technical problem]

In the conventional electrolytic method for the preparation of metal nano-particles, in order to minimize agglomeration of the particles and obtain fine particles, the aqueous electrolytic solution is agitated by ultrasonicator, stirrer, etc. However, they can not completely prevent agglomeration of the metal nano-particles by attractions between particles, and thus the size of particles prepared by the conventional method is not suitable for applications in a medicine. Further, in case that the prepared particles are contained in pure water, liquid for drugs, etc., the particles become accumulated and coarse with the lapse of time due to attractions between particles.

Furthermore, much time and cost should be paid for the process of precipitation and drying. When administered into a body, the prepared particles have to be dissolved in pure water or the other solution to produce a colloidal solution, which also raises the cost for the preparation of colloidal solution of metal nano-particles.

### [Technical solution]

The present invention has been made in an effort to solve the above problems of the conventional electrolytic method for the preparation of metal nano-particles, and it is an object to provide a method of producing a colloidal solution of metal nano-particles, which inhibits agglomeration of the metal nano-particles extracted in the aqueous electrolytic solution during the preparation process due to attractions between molecules to thereby minimize the size of metal nano-particles dispersed in the colloidal solution, and prevents the particles from coarsening by agglomeration of the metal nano-particles, when administered into a body or even though the solution is kept for a long time, to thereby maintain the dispersed state stably.

It is another object of the present invention to provide a method of producing a colloidal solution of metal nano-particles which can be administered immediately after the preparation of the particles without performing precipitation and drying processes.

It is yet another object of the present invention to provide metal nano-particles which can maintain a stably dispersed state without agglomeration of the particles when they are administered into a body or a colloidal solution is formed.

### [Description of Drawings]

FIG. 1 is a photograph of transmission electron microscopy for gold nano-particles which were prepared by adding Polysorbate 20 as described in Example 3.
FIG. 2 is a photograph of transmission electron microscopy of platinum nano-particles prepared according to Example 6.

### [Best Mode]

In an effort to prevent agglomeration of metal nano-particles in an aqueous electrolytic solution due to attractions between particles, the present inventors found that when a polysorbate is incorporated into an aqueous electrolytic solution, since the outer surface of extracted particles are coated with the polysorbate, agglomeration of the particles by the attractions can be completely prevented without adversely affecting the ionization and deposition of metal nano-particles.

In one embodiment, the present invention provides a method of producing a colloidal solution of metal nano-particles in which a pair of metal electrodes is oppositely arranged in an aqueous electrolytic solution in which metal salts are dissolved and a current is applied to the two electrodes while stirring the aqueous electrolytic solution using stirring means so that metal ions in the solution are reduced to extract metal nano-particles, wherein the method is characterized by adding polysorbate to the aqueous electrolytic solution to coat the surface of metal nano-particles extracted in the solution, thereby preventing agglomeration of the metal nano-particles.

According to the present method, as discussed above, because of coating of the surface of the extracted metal nano-particles, accumulation of the metal nano-particles by attractions between molecules can be completely prevented without adversely affecting the ionization and extraction of the particles. That is, polysorbate acts as a dispersing agent, and thus ultra-fine particles with a size of about 3 nm are stably maintained in the aqueous electrolytic solution and coarsening of the particles by accumulation of the metal nano-particles is inhibited even though they are stored for a long time, thereby maintaining the dispersed state of the particles stably.

The size of the particles is ultra-fine. Further, the particles are not accumulated in a body and can stably maintain the state of dispersion. Thus, they are administered into a body, they can efficiently exhibit their pharmacological effects and be easily excreted out of body through urine.

Polysorbate used in the present method includes any one of Polysorbate 20, 60, 65 and 80. The amount of polysorbate added to the aqueous electrolytic solution is 0.005 % by weight to 5 % by weight. If the amount of addition is below 0.005 % by weight, it is difficult to properly achieve the effect for the prevention of accumulation based on coating of the particles. If the ratio of polysorbate is over a certain value, the effect in preventing agglomeration of the metal nano-particles is no more increased and the size of particles is maintained constantly. If polysorbate is added in an amount of more than 5 % by weight, the solution is foamed, the amount of extraction of metal nano-particles is reduced and an offensive smell occurs, which makes the application of particles to a medicine inadequate.

Typically, the metal nano-particles deposited in the aqueous electrolytic solution by an electrolytic method are precipitated and dried, and they are stored and distributed in a state of powder. In order to administer them into a body, generally they are dissolved in pure water or the others again. Under the circumstance, the present inventors have conducted many experiments for a long time on various metals on the assumption that if a colloidal solution of metal nano-particles stably maintains its dispersion state after being stored for a long time and the metal salt used for the preparation of aqueous electrolytic solution is not harmful to a body, the prepared colloidal solution per se may be directly applied to a body as a medicine through injection or oral administration without performing cumbersome process such as precipitation, drying, etc.

As a result of this, the present inventors have found that in case where alkaline metal salts such as sodium citrate, potassium citrate, lithium citrate, sodium ascorbate, etc. is applied as a metal salt, metal nano-particles can be efficiently extracted and a colloidal solution of metal nano-particles which is not harmful can be prepared.

The colloidal solution of metal nano-particles prepared according to the above method has an advantage that since the alkaline metal salts are not harmful for a body and the prepared metal nano-particles are hardly agglomerated in the solution, the solution can maintain a stable colloid condition even though it is stored for a long time and, thus, without any separate process of precipitation or drying, it can be applied to a body as a medicine through injection or oral administration.

Hereinafter, the present invention will be illustrated in details with reference to examples.

### Example 1

In order to study the dispersity of metal nano-particles which are prepared by applying an alternating current after adding a dispersing agent, sodium citrate was dissolved in water to prepare an electrolytic aqueous solution. To the aqueous electrolytic solution was added each different dispersing agent. That is, each of Polysorbate 20, 60, 65, 80, carboxy methyl cellulose, and polyacrylate sodium was added in an amount of 0.01 % to prepare 6 kinds of aqueous electrolytic solutions. After soaking a pair of gold (Au) electrodes into each of aqueous electrolytic solutions, 10 V of voltage which is over ionization energy was applied for 20 hours while stirring the solution, so that metal nano-particles were produced. To prevent the temperature of aqueous electrolytic solution from rising excessively due to the heat occurred during electrolysis, a cooling pipe was set inside the solution, thereby maintaining the temperature below 90 °C.

### Example 2

In order to study the dispersity of metal nano-particles which are prepared by applying an alternating current to produce the particles and subsequently adding a dispersing agent, sodium citrate was dissolved in water to prepare six electrolytic aqueous solutions. After soaking a pair of gold (Au) electrodes into each of aqueous electrolytic solutions, 10 V of voltage which is over ionization energy was applied for 20 hours while stirring the solution, so that metal nano-particles were produced. To the six colloidal solutions of nano-particles was added each different dispersing agent. That is, each of Polysorvate 20, 60, 65, 80, carboxy methyl cellulose, and polyacrylate sodium was added in an amount of 0.01%. To prevent the temperature of aqueous electrolytic solution from rising excessively due to the heat occurred during electrolysis, a cooling pipe was set inside the solution, thereby maintaining the temperature below 90 °C.

Table 1 shows the properties of the colloidal solutions of gold nano-particles prepared in Examples 1 and 2.

**[Table 1]**

| Dispersing agent | Extraction of particles after adding dispersing agent | | | Addition of dispersing agent after extracting particles | | |
|---|---|---|---|---|---|---|
| | Mean size of particle(nm) ±standard error | Dispersity (observation after 30 days) | Color | Mean size of particle(nm)± standard error | Dispersity (observation after 30 days) | Color |
| Polysorbate 20 | 2.1±0.45 | excellent | purple | 15±11 | little precipitated | red |
| Polysorbate 60 | 3.2±0.51 | excellent | purple | 21±13 | little precipitated | red |
| Polysorbate 65 | 3.6±0.49 | excellent | purple | 18±10 | little precipitated | red |
| Polysorbate 80 | 3.3±0.44 | excellent | purple | 17±11 | little precipitated | red |
| Carboxy methyl cellulose | 155±52 | gel observed and precipitated | black | 25±19 | little precipitated | red |
| Polyacrylate sodium | 225±73 | precipitated | black | 23±18 | little precipitated | red |

As shown in the above Table, in case that metal nano-particles are extracted by applying a voltage after adding the dispersing agent of polysorvate, the highest quality of colloidal solution could be obtained. The size of particles was below 3 nm, particles were ultra-fine and showed a high dispersity, and the color of gold particles was purple which is a color in gold particles having a size of below 5 nm.

However, it was observed that carboxy methyl cellulose and polyacrylate sodium do not function as a dispersing agent. The prepared particles were precipitated and black. It is assumed that carboxy methyl cellulose and polyacrylate were reacted with sodium citrate in an electric field to synthesize a third material.

In Example 2 in which a dispersing agent was added after extracting metal nano-particles, a little dispersity was maintained, but particles grew in size during deposition. The average size of particles was 15 to 25 nm. It seems that the extracted particles were contacted each other in the absence of dispersing agent and agglomerated by attractions between particles to thereby grow in size.

### Example 3

In order to study the change of dispersity of metal nano-particles according to the addition amount of dispersing agent, while varying the amount of polysorbate added to an aqueous electrolytic solution in which sodium citrate is dissolved from 0.005 to 5 %, a colloidal solution of gold nano-particles was prepared, in which gold electrodes were used, the aqueous electrolytic solution was stirred during the extraction, the temperature of the aqueous electrolytic solution was maintained below 90 °C, and 20 V alternating current was applied.

Table 2 shows the average size of gold colloid particles according to the change of the kind and the amount of dispersing agent.

**[Table 2]**

| Dispersing agent | Addition amount of dispersing agent (%) | | | | | | |
|---|---|---|---|---|---|---|---|
| | 0.005 | 0.01 | 0.05 | 0.1 | 0.2 | 0.3 | 5 |
| Polysorbate 20 | 4.2±0.63 | 2.1±0.4 | 1.5±0.3 | 0.78±0.2 | 0.79±0.2 | 0.77±0.2 | 0.78±0.2 |
| | | 5 | 5 | 5 | 3 | 3 | 1 |
| Polysorbate 60 | 5.3±0.68 | 3.2±0.5 | 2.5±0.3 | 1.75±0.2 | 1.73±0.3 | 1.71±0.2 | 1.75±0.1 |
| | | 1 | 9 | 7 | 6 | 5 | 9 |
| Polysorbate 65 | 5.6±0.57 | 3.6±0.4 | 2.7±0.4 | 1.78±0.3 | 1.76±0.3 | 1.80±0.4 | 1.72±0.3 |
| | | 9 | 1 | 3 | 1 | 0 | 5 |
| Polysorbate 80 | 5.1±0.55 | 3.3±0.4 | 2.3±0.3 | 1.79±0.2 | 1.76±0.3 | 1.75±0.3 | 1.71±0.2 |
| | | 4 | 2 | 9 | 8 | 6 | 4 |

As shown in Table 2, as the amount of dispersing agent added is increased, the size of gold particles prepared is reduced. In case that 0.005 % by weight of dispersing agent was added, the size of particle was 4.2 to 5.6 nm. When the dispersing agent was added in an amount of 0.1 % by weight or more, the size of particle was almost constant. When the dispersing agent was added in an amount of 5 % by weight, the size of particle was 0.78 to 1.75 nm. However, polysorbate was added in an amount of more than 5 % by weight, the solution was foamed, the amount of extraction of metal nano-particles was reduced and an offensive smell occurs, which makes the application of the particles to a medicine inadequate.

Thus, it is preferred to add the dispersing agent in an amount of 0.005 % by weight to 5 % by weight.

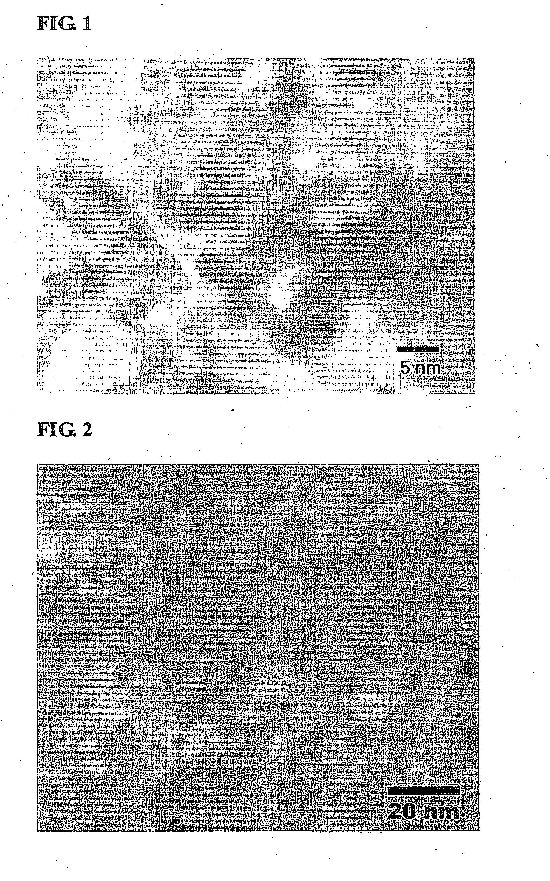

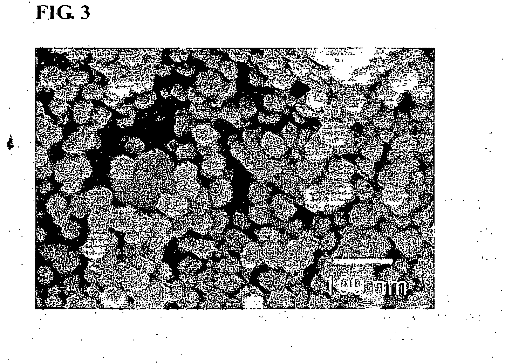

FIG. 1 is a photograph of transmission electron microscopy for gold nano-particles prepared by adding 0.01 % by weight of Polysorbate 20 as described in Example 3.

### Example 4

In order to study the dispersity and the size of metal nano-particles according to the change of temperature of electrolyte, while varying the temperature from 80 to 100 °C, a colloidal solution of gold nano-particles was prepared, in which cooling coil was set inside an aqueous electrolytic solution and the temperature was controlled by changing the amount of flowing water. 0.1 % by weight of Polysorbate 20 was used as a dispersing agent, the aqueous electrolytic solution was stirred during the extraction, and 20 V alternating current was applied for 20 hours.

Table 3 shows the size and the dispersity of gold nano-particles according to change of temperature.

**[Table 3]**

| Temperature | Mean size of particle(nm)±standard error | Dispersity(observation after 30 days) |
|---|---|---|
| 80°C | 0.76±0.30 | excellent |
| 85°C | 0.75±0.33 | excellent |
| 90°C | 0.78±0.25 | excellent |
| 95°C | 0.81±0.25 | excellent |
| 98°C | 0.91±0.36 | excellent |
| 100°C | 1.5±0.42 | little precipitated |

As shown in Table 3, as the temperature of aqueous electrolytic solution rise, the size of particle is enlarged. It seems that the moving velocity of particles dispersed in the solution is increased with the rise in temperature and, thus, the frequency of collision between particles is increased, resulting in enlarging the size of particle. At a temperature of 100 °C, a little precipitation was occurred due to the increased collision frequency of particles.

### Example 5

Using the addition amount of dispersing agent and the temperature which are determined based on the result obtained from Example 4 and applying a direct current, a colloidal solution of gold nano-particles was prepared to determine whether the solution stably maintains its dispersity. Sodium citrate acid was dissolved in water and each of polysorbate 20, 60, 65 and 80 was added in an amount of 0.01%. After soaking a pair of gold electrodes into each of aqueous electrolytic solutions, 20 V direct current was applied for 20 hours with a temperature of 95 °C to thereby prepare a colloidal solution of gold nano-particles.

Table 4 shows the size of the gold nano-particle colloid prepared by applying a direct current and the diversity of the colloidal solution.

**[Table 4]**

| Dispersing agent | Extraction of particle after addition of dispersing agent | | |
|---|---|---|---|
| | Mean size of particle(nm)±standard error | Dispersity(observation after 30 days) | Color |
| Polysorbate 20 | 3.2±0.54 | excellent | purple |
| Polysorbate 60 | 4.2±0.41 | excellent | purple |
| Polysorbate 65 | 4.1±0.43 | excellent | purple |
| Polysorbate 80 | 4.7±0.54 | excellent | purple |

Table 4 presents the average size of the particles and the dispersity of the colloidal solution prepared according to Example 5. The size of particle prepared according to this example is larger than that of the particles prepared by applying an alternating current by about 1 nm, but the dispersity and the color were excellent, which indicates that nano-particle colloid can be prepared with a direct current.

### Example 6

Using the addition amount of dispersing agent and the temperature which are determined based on the result obtained from Example 4, a colloidal solution of platinum nano-particles was prepared. Sodium citrate acid was dissolved in water and Polysorbate 20 was added in an amount of 0.01%. After soaking a pair of platinum electrodes into the aqueous electrolytic solution, 20 V alternating current was applied for 20 hours with a temperature of 95 °C, to thereby prepare a colloidal solution of platinum nano-particles.

FIG. 2 is a photograph of transmission electron microscopy of platinum nano-particles prepared according to Example 6. The size of particles prepared was about 2 nm, indicating that the particles are well dispersed into the solution by Polysorbate 20. Therefore, the above conditions for dispersion are also suitable for the preparation of platinum nano-particles.

Further, in an experiment using a pair of gold/platinum as metal electrodes, the colloidal solution in which gold and platinum are dispersed together was prepared.

### [Industrial Applicability]

As disclosed above, the method of the present invention provides a colloidal solution of metal nano-particles in which metal nano-particles are stably dispersed. Even though the colloidal solution is stored for a long time, coarsening of metal nano-particles due to agglomeration is prevented and, thus, the colloidal solution can maintain a stable colloid state. Further, without any separate process of precipitation or drying, the colloidal solution can be administered to a body as a medicine through injection and oral administration.

Even though the above description is focused on the application of metal nano-particles to a medicine, it will be readily apparent to any one skilled in the art that the feature or merit of the present invention is not limited to the application of metal nano-particles as a medicine.

## Claims

1. A method of producing a colloidal solution of metal nano-particles in which a pair of metal electrodes is oppositely arranged in an aqueous electrolytic solution in which metal salts are dissolved and a current is applied to the two electrodes while stirring the aqueous electrolytic solution using stirring means so that metal ions in the solution are reduced to extract metal nano-particles, **characterized by** adding polysorbate to the aqueous electrolytic solution to coat the surface of metal nano-particles extracted in the solution, thereby preventing agglomeration of the metal nano-particles.

2. The method of claim 1, wherein one or more polysorbates selected from the group consisting of Polysorbate 20, 60, 65 and 80 are added in an amount of 0.005 % by weight to 5 % by weight to the aqueous electrolytic solution.

3. The method of claim 1 or 2, wherein the metal salts dissolved in the aqueous electrolytic solution comprise one or more alkaline metal salts selected from the group consisting of sodium citrate, potassium citrate, lithium citrate and sodium ascorbate.

## Patentansprüche

1. Verfahren zur Herstellung einer kolloidalen Lösung von Nanopartikeln, bei dem ein Paar von Metallelektroden in einer wässrigen elektrolytischen Lösung entgegengesetzt angeordnet sind, in der Metallsalze gelöst sind, und ein Strom an den beiden Elektroden angelegt wird, während die wässrige elektrolytische Lösung gerührt wird unter Verwendung von Rührmitteln, so dass Metallionen in der Lösung reduziert werden, so dass metallische Nanopartikel extrahiert werden, dadurch charakterisiert, dass Polysorbat zu der wässrigen elektrolytischen Lösung gegeben wird, um die Oberfläche der in die Lösung extrahierten metallischen Nanopartikel zu beschichten, wodurch Agglomeration der metallischen Nanopartikel verhindert wird.

2. Verfahren nach Anspruch 1, wobei ein oder mehrere aus der aus Polysorbat 20, 60, 65 und 80 bestehenden Gruppe ausgewählte Polysorbate in einer Menge von 0,005 Gew.-% bis 5 Gew.-% zu der wässrigen elektrolytischen Lösung gegeben werden.

3. Verfahren nach Anspruch 1 oder 2, wobei die in der wässrigen elektrolytischen Lösung gelösten Metallsalze ein oder mehrere Alkalimetallsalze umfassen, die ausgewählt werden aus der aus Natriumcitrat, Kaliumcitrat, Lithiumcitrat und Natriumascorbat bestehenden Gruppe.

## Revendications

1. Procédé pour produire une solution colloïdale de nanoparticules de métal dans laquelle une paire d'électrodes de métal est arrangée d'une manière opposée l'une à l'autre dans une solution électrolytique aqueuse, dans laquelle des sels de métal sont dissolus et un courant est appliqué sur les deux électrodes en agitant la solution électrolytique aqueuse en utilisant des moyens d'agitation pour que des ions de métal dans la solution sont réduits pour extraire des nanoparticules de métal, **caractérisé par** le fait d'ajouter du polysorbate à la solution électrolytique aqueuse pour revêtir la surface des nanoparticules de métal extraites dans la solution en empêchant de ce fait l'agglomération des nanoparticules de métal.

2. Procédé selon la revendication 1, dans lequel un ou plusieurs polysorbates sélectionnés parmi le groupe consistant en le Polysorbate 20, 60, 65 et 80 sont ajoutés dans une quantité de 0,005 % en poids à 5 % en poids à la solution électrolytique aqueuse.

3. Procédé selon la revendication 1 ou 2, dans lequel les sels de métal dissolus dans la solution électrolytique aqueuse comprennent un ou plusieurs sels de métal sélectionnés parmi le groupe en le citrate de sodium, le citrate de potassium, le citrate de lithium, et l'ascorbate de sodium.
